# EUROPÄISCHE PATENTANMELDUNG

(11) **EP 3 923 067 A1**
(43) Veröffentlichungstag der Anmeldung: **15.12.2021**
(21) Anmeldenummer: 21178117.4
(22) Anmeldetag: 08.06.2021
(51) Int. Cl.: G03B 15/03, G03B 17/17, G03B 17/53

(54) **VORRICHTUNG ZUR ERFASSUNG BIOMETRISCHER MERKMALE EINES GESICHTS EINER PERSON**

(30) Priorität: 12.06.2020 DE 102020115566
(71) Anmelder: Bundesdruckerei GmbH, 10969 Berlin (DE)
(72) Erfinder: Wolf, Andreas, 13158 Berlin (DE); Rabeler, Uwe, 30453 Hannover (DE)
(74) Vertreter: Glawe, Delfs, Moll

(57) **Zusammenfassung**

Vorrichtung (10) zur Erfassung biometrischer Merkmale eines Gesichts (12) einer Person, mit einem Gehäuse (14), einer Aufnahmeöffnung (16), die zur Platzierung in kurzem Abstand vor einem zu erfassenden Gesicht (12) ausgebildet ist, einer Kamera (18), die zur Erfassung der biometrischen Merkmale ausgebildet ist, und einem in dem Gehäuse (14) derart angeordneten Umlenkspiegel (20), um von dem vor der Aufnahmeöffnung (16) platzierten zu erfassenden Gesicht (12) reflektiertes Licht in die Kamera (18) zu lenken, wobei das Gehäuse (14) derart ausgebildet ist, dass eine diffuse Beleuchtung des vor der Aufnahmeöffnung (16) platzierten zu erfassenden Gesichts (12) erfolgt.

## Beschreibung

### Technisches Gebiet

Die vorliegende Erfindung betrifft eine Vorrichtung zur Erfassung biometrischer Merkmale eines Gesichts einer Person.

### Beschreibung des Standes der Technik

Aus dem Stand der Technik sind verschiedene Datenerfassungssysteme zur Erfassung biometrischer Merkmale eines Gesichts einer Person bekannt. ISO 39794-5 stellt dabei verschiedene Anforderungen an die zu erfassenden Gesichtsbilder. Daraus ergibt sich zum Beispiel, dass für gute Ergebnisse biometrischer Vergleichsalgorithmen für Gesicht und Iris die entsprechenden Kameraaufnahmen so frontal wie möglich erfolgen sollten. Zudem wird ein Mindestabstand zwischen Gesicht und Sensor (Kamera) von mindestens einem Meter gefordert.

Üblicherweise werden Fotos für Ausweise in entsprechend konstruierten Fotoautomaten oder in professionell ausgestatteten Fotoateliers angefertigt. Nun sind jedoch Überlegungen aufgekommen, das sogenannte "Gesichts-Enrolment", also das fotografische Erfassen von biometrischen Merkmalen eines Gesichts, in die für die Ausweiserstellung bzw. -ausgabe zuständigen Behörden zu verlagern. Dort sind jedoch regelmäßig keine zuverlässigen Rahmenbedingungen, insbesondere Licht- bzw. Beleuchtungsverhältnisse, gegeben, und das Personal ist hinsichtlich der Anfertigung von geeigneten Fotoaufnahmen nicht geschult.

Aus der DE 10 2014 112 494 A1 ist eine gattungsgemäße Vorrichtung zur Erfassung biometrischer Merkmale eines Gesichts einer Person bekannt, bei der in einem Gehäuse eine Kamera zur Erfassung der biometrischen Merkmale und ein semi-transparenter Spiegel vorgesehen sind, wobei der semi-transparente Spiegel zwischen einer Person und der Kammer angeordnet und so ausgerichtet ist, dass auf der der Person zugewandten Seite des semi-transparenten Spiegels der Strahlengang von auf den semi-transparenten Spiegel einfallendem Licht parallel ist zu dem Strahlengang des von dem semi-transparenten Spiegel zurückreflektierten Teil dieses Lichts. Hinter dem semi-transparenten Spiegel ist ein Umlenkspiegel derart angeordnet, dass der auf den Umlenkspiegel fallende, durch den semi-transparenten Spiegel transmittierte Teil des Lichts in die Kamera gelenkt wird. Die Vorrichtung weist des Weiteren eine Bedieneinheit für die Person auf. Die Person muss ihr zu erfassendes Gesicht vor dem semi-transparenten Spiegel positionieren, wofür das Gehäuse samt Kamera und Spiegeln in der Höhe verstellbar ist.

### Zusammenfassung der Erfindung

Ausgehend hiervon wird erfindungsgemäß eine Vorrichtung mit den Merkmalen des Anspruchs 1 vorgeschlagen.

Die Erkenntnis der Erfindung liegt darin begründet, eine durch ungeschultes Personal bzw. durch den Nutzer selbst zu bedienende Vorrichtung zur Erfassung biometrischer Merkmale eines Gesichts einer Person derart auszugestalten, dass zur Erfüllung der ISO-Vorgaben eine geeignete Beleuchtung des zu erfassenden Gesichts gewährleistet ist, indem ein Gehäuse der Vorrichtung mit einer Aufnahmeöffnung, vor der das zu erfassende Gesicht zu platzieren ist, derart ausgebildet ist, dass eine diffuse Beleuchtung des vor der Aufnahmeöffnung platzierten Gesichts erfolgt.

Insbesondere können in dem Gehäuse Leuchtmittel zum Erzeugen einer diffusen Beleuchtung vorgesehen sein und/oder das Gehäuse weist eine diffus reflektierende Innenfläche auf. Bspw. kann die Gehäuseinnenseite weiß bzw. hell ausgestaltet sein.

Eine geeignete geometrische Ausgestaltung des Gehäuses bzw. einer Innenseite bzw. -fläche des Gehäuses kann für eine diffuse Beleuchtung förderlich ausgestaltet sein. Bspw. kann das Gehäuse als Teil-Hohlkugel ausgebildet sein. Die Aufnahmeöffnung kann dabei der aufgeschnittenen Kugelseite entsprechen. Alternativ kann das Gehäuse die Form einer Pyramide bzw. eines Pyramidenstumpfs aufweisen, wobei die Aufnahmeöffnung dann als offene Grundfläche der Pyramide ausgebildet sein kann. Als weitere Alternative kann das Gehäuse quader- bzw. würfelförmig ausgebildet sein, wobei die Aufnahmeöffnung eine offene Seite des Gehäuses sein kann. Dem Fachmann erschließen sich weitere geeignete Gehäuseformen bzw. Ausgestaltungen der Innenfläche des Gehäuses ohne weiteres.

Um eine möglichst kompakte Ausgestaltung der erfindungsgemäßen Vorrichtung zu erzielen, ist in dem Gehäuse ein Umlenkspiegel vorgesehen, der einer Faltung/Umlenkung des Strahlengangs von dem zu erfassenden Gesicht bis zur Kamera dient. Der Umlenkspiegel kann semi-transparent sein. Dies eröffnet die Möglichkeit, den Umlenkspiegel bspw. zum Einblenden einer Nutzerführung für die Person auszubilden. Hierzu wird in an sich bekannter Art und Weise hinter dem Umlenkspiegel (also auf der der Person bzw. der Aufnahmeöffnung abgewandten Seite) ein Projektionsmittel angeordnet, das mit einer Rechen- bzw. Steuereinheit verbunden ist und zur Anzeige computererzeugter Anweisungen zur Benutzerführung dient.

Weitere Vorteile und Ausgestaltungen der Erfindung ergeben sich aus den Unteransprüchen, der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, wie sie in den Ansprüchen definiert ist, zu verlassen.

Die Erfindung ist anhand von Ausführungsbeispielen in den Zeichnungen schematisch dargestellt und wird im Folgenden unter Bezugnahme auf die Zeichnungen ausführlich beschrieben.

### Kurzbeschreibung der Zeichnungen

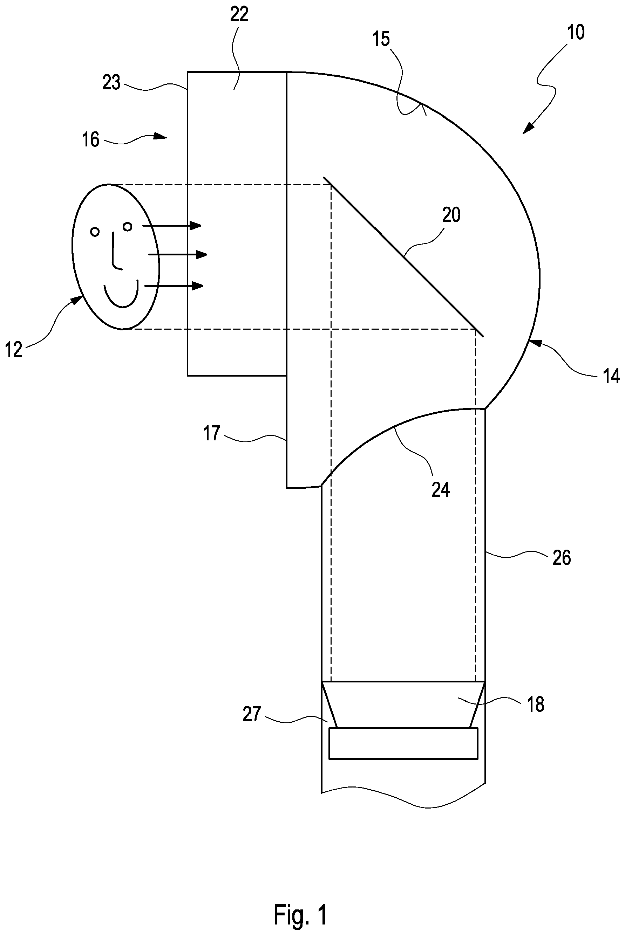

Figur 1 zeigt stark schematisch eine erfindungsgemäße Vorrichtung in seitlich geschnittener Darstellung mit einem vor der Aufnahmeöffnung platzierten zu erfassenden Gesicht

### Ausführliche Beschreibung

Figur 1 zeigt eine erfindungsgemäße Vorrichtung 10 zur Erfassung biometrischer Merkmale eines Gesichts 12 einer (nicht dargestellten) Person.

Die Erfassungsvorrichtung 10 umfasst ein Gehäuse 14, das in dem dargestellten Ausführungsbeispiel im Wesentlichen als Halbhohlkugel ausgebildet ist.

An einem durch die Schnittfläche der Halbhohlkugel 14 gebildeten Rand 17 ist durch bspw. teilzylindrische seitliche Verlängerung eine Abschirmung 22 gebildet, die eine Aufnahmeöffnung 16 definiert. Die Aufnahmeöffnung 16 ist dazu vorgesehen, dass das zu erfassende Gesicht 12 in vergleichsweise kurzem Abstand vor ihr positioniert wird. Die Abschirmung 22 kann nach unten (im Sinne der Darstellung der Figur 1) hin offen sein.

Bspw. kann die Halbkugel einen Durchmesser von 60 cm aufweisen. Selbstverständlich sind sowohl kleinere als auch größere Durchmesser möglich, der Fachmann wird unter Abwägung der Aspekte der Kompaktheit der Ausgestaltung der erfindungsgemäßen Vorrichtung einerseits und typischen Kopfgrößen andererseits (damit das vollständige Gesicht erfasst wird) in der Lage sein, einen sachgerechten Durchmesser festzulegen. Die seitlichen Verlängerungen der Abschirmung 22 können bspw. 20 cm, aber selbstverständlich auch weniger oder mehr, betragen. Das aufzunehmende Gesicht 12 kann dann typischerweise direkt vor einem zu dem Gesicht 12 weisenden Rand 23 der Abschirmung 22 oder noch näher, d.h. zwischen den Seitenflächen der Abschirmung 22 positioniert werden.

Des Weiteren umfasst die Erfassungsvorrichtung 10 eine Kamera 18 zur Erfassung der biometrischen Merkmale des Gesichts 12. In dem dargestellten Ausführungsbeispiel ist die Kamera 18 außerhalb des Gehäuses 14 angeordnet. Die Kamera 18 ist vertikal unterhalb des Gehäuses 14 angeordnet, und in dem Gehäuse 14 ist ein Umlenkspiegel 20 vorgesehen, der von dem vor der Aufnahmeöffnung 16 platzierten Gesicht 12 reflektiertes Licht (im Wesentlichen senkrecht nach unten) in die Kamera 18 lenkt. Der von dem Gesicht 12 rührende Strahlengang wird somit gefaltet.

Andere Anordnungen der Kamera sind grundsätzlich möglich, aus Gründen der Kompaktheit der Gestaltung ist eine Anordnung oberhalb oder insbesondere unterhalb des Gehäuses wohl zu bevorzugen.

Das von dem Umlenkspiegel 20 gefaltete bzw. umgelenkte Licht tritt durch eine zu diesem Zwecke vorgesehene Austrittsöffnung 24 in dem Gehäuse 14 aus dem Gehäuse 14 aus und wird wie bereits erläutert auf die Kamera 18 gelenkt. Zur Abschirmung von störendem Fremdlicht kann wie dargestellt eine Strahlengangverkleidung 26 vorgesehen sein, die sich von dem Gehäuse 14 um den Strahlengang herum (bspw. Zylinder förmlich oder rechteckig) nach unten erstreckt. Die Strahlengangverkleidung 26 kann in ihrem Inneren reflexionsfrei bzw. reflexionsarm, bspw. schwarz, ausgestaltet sein. Die Kamera 18 kann wie dargestellt in einem unteren Abschnitt 27 der Strahlengangverkleidung 26 angeordnet sein. Der gefaltete Strahlengang sollte insgesamt eine geeignete Länge haben, bspw. 1 m bis 1,20 m.

Wie bereits voranstehend erläutert, ist das Gehäuse 14 derart ausgebildet, dass eine diffuse Beleuchtung des vor der Aufnahmeöffnung 16 platzierten Gesichts 12 erfolgt. Dies kann bspw. durch Ausgestaltung einer Innenfläche 15 des Gehäuses 14 mit einer diffus reflektierenden Oberfläche erfolgen. Alternativ oder ergänzend können an dem Gehäuse 14 Leuchtmittel zum Erzeugen einer diffusen Beleuchtung vorgesehen sein.

Hierzu kann das Innere, d.h. die Innenfläche 15, des Gehäuses 14 weiß oder zumindest hell gestaltet sein. Wird diese in dem dargestellten Ausführungsbeispiel teilkugelförmige Fläche beleuchtet, ergibt sich eine homogene und indirekte Beleuchtung des vor der Aufnahmeöffnung 16 platzierten Gesichts 12. Zur Beleuchtung kann bspw. eine Auskleidung der Innenfläche 15 des Gehäuses 14 (selbstverständlich nicht nur bei der dargestellten Ausführungsform) mit geeigneten Leuchtelementen ausgekleidet sein, bspw. LED- oder OLED-Elementen. Alternativ oder ergänzend können Leuchtelemente entlang des Randes 17 des Gehäuses 14 angeordnet sein. Diese Leuchtelemente können derart angeordnet sein, dass sie auf die Innenfläche 15 des Gehäuses 14 gerichtet sind. Bei diesen Leuchtelementen kann es sich bspw. um LED-oder OLED-Elemente handeln. Zusätzlich können geeignete optische Linsen vorgesehen sein.

Als weitere Alternative kann bspw. das Gehäuses 14 lichtleitend ausgestaltet sein, bspw. durch eine Vielzahl von in das Grundmaterial des Gehäuses 14 eingelassenen Lichtleitern, die von einer lichtstarken Lichtquelle, auf LED) gespeist werden. Die Lichtleiter können an definierten Stellen vorgesehen sein, die so ausgewählt sind, dass das ausgekoppelte Licht das Gesicht der zu erfassenden Person homogen beleuchtet.

Gemäß einer weiteren Ausführungsform könnte das Gehäuse 14 der Erfassungsvorrichtung 10 (gegebenenfalls einschließlich der Abschirmung 22) schaltend transparent ausgeführt sein. Dabei handelt es sich um eine an sich bekannte Vorgehensweise, bei der Glas mit einer mit elektrischem Strom beaufschlagbaren Flüssigkristallschicht beschichtet wird. Je nach Schaltzustand ist diese Flüssigkristallschicht transparent oder intransparent.

Der Umlenkspiegel 20 kann halbdurchlässig ausgebildet sein, so dass die Spiegelfläche zur Darstellung von Benutzeranweisungen für einen vor der Aufnahmeöffnung 16 stehenden Benutzer verwendet werden kann, bspw. durch Positionierung eines (nicht dargestellten) Anzeigegeräts im Strahlengang hinter dem Umlenkspiegel 20 oder durch Projizieren einer Anzeige auf den Spiegel mittels geeigneter Projektionsmittel.

### Bezugszeichenliste

- 10: Vorrichtung/Erfassungsvorrichtung
- 12: Gesicht
- 14: Gehäuse
- 15: Innenfläche
- 16: Aufnahmeöffnung
- 17: Rand
- 18: Kamera
- 20: Umlenkspiegel
- 22: Abschirmung
- 23: Rand
- 24: Austrittsöffnung
- 26: Strahlengangverkleidung
- 27: unterer Abschnitt

## Patentansprüche

1. Vorrichtung (10) zur Erfassung biometrischer Merkmale eines Gesichts (12) einer Person, mit
- einem Gehäuse (14),
- einer Aufnahmeöffnung (16), die zur Platzierung in kurzem Abstand vor einem zu erfassenden Gesicht (12) ausgebildet ist,
- einer Kamera (18), die zur Erfassung der biometrischen Merkmale ausgebildet ist,
- einem in dem Gehäuse (14) derart angeordneten Umlenkspiegel (20), um von dem vor der Aufnahmeöffnung (16) platzierten zu erfassenden Gesicht (12) reflektiertes Licht in die Kamera (18) zu lenken,
wobei das Gehäuse (14) derart ausgebildet ist, dass eine diffuse Beleuchtung des vor der Aufnahmeöffnung (16) platzierten zu erfassenden Gesichts (12) erfolgt.

2. Vorrichtung (10) nach Anspruch 1, bei der in bzw. an dem Gehäuse (14) Leuchtmittel zum Erzeugen einer diffusen Beleuchtung vorgesehen sind.

3. Vorrichtung (10) nach Anspruch 1 oder 2, bei der in dem Gehäuse (14) eine diffus reflektierende Innenfläche (15) vorgesehen ist.

4. Vorrichtung (10) nach einem der Ansprüche 1 bis 3, bei der mindestens eine sich in Richtung eines vor der Aufnahmeöffnung (16) platzierten Gesichts (12) erstreckende Abschirmung (22) zum Abschirmen von externer Lichteinstrahlung auf das zu erfassende Gesicht (12) vorgesehen ist.

5. Vorrichtung (10) nach einem der Ansprüche 1 bis 4, bei der die Kamera (18) außerhalb des Gehäuses (14) angeordnet ist und eine Austrittsöffnung (24) für von dem Umlenkspiegel (20) in Richtung der Kamera (18) gelenktes Licht vorgesehen ist, wobei vorzugsweise eine Strahlengangverkleidung (26) für das in Richtung der Kamera (18) gelenkte Licht vorgesehen ist.

6. Vorrichtung (10) nach einem der Ansprüche 1 bis 5, deren Gehäuse
- als Teil-Hohlkugel ausgebildet ist und die Aufnahmeöffnung (16) vorzugsweise der aufgeschnittenen Kugelseite entspricht, oder
- im Wesentlichen die Form einer Pyramide bzw. eines Pyramidenstumpfs aufweist und die Aufnahmeöffnung (16) vorzugsweise einer offenen Grundfläche der Pyramide entspricht, oder
- Würfel oder Quader mit einer offenen Seite als Aufnahmeöffnung (16) ausgebildet ist.

7. Vorrichtung (10) nach einem der Ansprüche 1 bis 6, deren Umlenkspiegel (20) semi-transparent ist und vorzugsweise zum Einblenden einer Nutzerführung ausgebildet ist.

8. Vorrichtung (10) nach einem der Ansprüche 2 bis 7, bei der die Leuchtmittel zumindest abschnittsweise entlang einer Einfassung im Bereich eines Randes (17) der Aufnahmeöffnung (16) angeordnet sind.

9. Vorrichtung (10) nach einem der Ansprüche 1 bis 8, bei der eine Wandung des Gehäuses (14) zumindest abschnittsweise als Lichtleiter ausgestaltet ist.

10. Vorrichtung (10) nach einem der Ansprüche 1 bis 9, bei der das Gehäuse (14) aus schaltbar transparentem Material ist.
